# EUROPEAN PATENT APPLICATION

(11) **EP 4 321 483 A1**
(43) Date of publication of application: **14.02.2024**
(21) Application number: 22784378.6
(22) Date of filing: 02.03.2022
(51) Int. Cl.: C01F 7/785, C08K 3/26, C08L 101/04

(54) **HYDROTALCITE COMPOUND, RESIN COMPOSITION, AND RESIN MOLDED BODY**

(30) Priority: 06.04.2021 JP 2021064733
(71) Applicant: SETOLAS Holdings, Inc., Takamatsu-shi, Kagawa 760-0026 (JP)
(72) Inventor: SUGIYAMA Hiroyuki, Sakaide-shi, Kagawa 762-0012 (JP); HOSOI Ken, Sakaide-shi, Kagawa 762-0012 (JP)
(74) Representative: Winter, Brandl - Partnerschaft mbB
(86) International application number: PCT/JP2022/008905
(87) International publication number: WO 2022/215393

(57) **Abstract**

Provided is a hydrotalcite-like compound that can achieve excellent heat stability. The hydrotalcite-like compound according to an embodiment of the present invention is represented by the following general formula (I), wherein the hydrotalcite-like compound has, in an X-ray diffraction (XRD) pattern thereof obtained with Cu-Kα radiation, two peaks assigned to (003) diffraction at a diffraction angle 2θ in a range of from 10° or more to 14° or less, and wherein a ratio R_{XRD} (S_{P2}/S_{P1}) of an area intensity of a second peak P2 having a peak top at a diffraction angle 2Θ in a range of from more than 12° to 14° or less to an area intensity of a first peak P1 having a peak top at a diffraction angle 2Θ in a range of from 10° or more to 12° or less is 0.7 or more and 50 or less:

(M²⁺)_{1-X}(M³⁺)_{X}(OH)₂(Aⁿ⁻)_{X/n}·mH₂O ··· (I)

in the formula (I), M²⁺ represents a divalent metal cation, M³⁺ represents a trivalent metal cation, Aⁿ⁻ represents an n-valent anion, X satisfies 0.1≤X<0.4, "n" represents an integer of from 1 to 6, and "m" satisfies 0<m≤10.

## Description

### Technical Field

The present invention relates to a hydrotalcite-like compound, a resin composition, and a resin molded body.

### Background Art

A chlorine-containing resin has been used in various products, such as a container, a pipe, and an insulating material, because of its high processability and high functionality. Meanwhile, the chlorine-containing resin has a problem in that its heat stability is low, and hence the quality of a product thereof is reduced by, for example, processing or a lapse of time. Specifically, there is a problem in that the appearance of the product is impaired by its foaming or coloring. To cope with the problem, the addition of a hydrotalcite-like compound has been proposed (e.g., Patent Literature 1). However, a further improvement in heat stability has been required.

### Citation List

### Patent Literature

[PTL 1] JP 2011-178966 A

### Summary of Invention

### Technical Problem

The present invention has been made to solve the above-mentioned problem, and an object of the present invention is to provide a hydrotalcite-like compound that can achieve excellent heat stability.

### Solution to Problem

According to one embodiment of the present invention, there is provided a hydrotalcite-like compound. The hydrotalcite-like compound is represented by the following general formula (I), wherein the hydrotalcite-like compound has, in an X-ray diffraction (XRD) pattern thereof obtained with Cu-Kα radiation, two peaks assigned to (003) diffraction at a diffraction angle 2Θ in a range of from 10° or more to 14° or less, and wherein a ratio R_{XRD} (S_{P2}/S_{P1}) of an area intensity of a second peak P2 having a peak top at a diffraction angle 2Θ in a range of from more than 12° to 14° or less to an area intensity of a first peak P1 having a peak top at a diffraction angle 2Θ in a range of from 10° or more to 12° or less is 0.7 or more and 50 or less:

(M²⁺)_{1-X}(M³⁺)_{X}(OH)₂(Aⁿ⁻)_{X/n}·mH₂O··· (I)

in the formula (I), M²⁺ represents a divalent metal cation, M³⁺ represents a trivalent metal cation, Aⁿ⁻ represents an n-valent anion, X satisfies 0.1≤X<0.4, "n" represents an integer of from 1 to 6, and "m" satisfies 0<m≤10.

In one embodiment, the hydrotalcite-like compound has, in the X-ray diffraction (XRD) pattern obtained with the Cu-Kα radiation, a third peak P3 having a peak top at a diffraction angle 2Θ in a range of from 36° or more to 38° or less, and a ratio R_{XRD}' (S_{P3}/S_{P1}) of an area intensity of the third peak P3 to the area intensity of the first peak P1 is 0.17 or more and 10 or less.

In one embodiment, the hydrotalcite-like compound has, in a FT-IR spectrum thereof obtained by a KBr tablet method, a first peak A1 in a range of from 1,270 cm⁻¹ to 1,460 cm⁻¹, and a second peak A2 in a range of from 1,460 cm⁻¹ to 1,720 cm⁻¹, and a ratio R_{IR} (S_{A2}/S_{A1}) of an area intensity of the second peak A2 to an area intensity of the first peak A1 is 0.65 or more and 1.35 or less.

In one embodiment, the hydrotalcite-like compound is substantially free of a peak or a shoulder in a range of from 2,930 cm⁻¹ to 3,140 cm⁻¹ in a FT-IR spectrum thereof obtained by a KBr tablet method.

In one embodiment, in the formula (I), X satisfies 0.2≤X<0.36, and "m" satisfies 0<m≤1.8.

According to another embodiment of the present invention, there is provided a resin composition. The resin composition includes: a resin containing a chlorine-containing resin; and the above-mentioned hydrotalcite-like compound.

In one embodiment, the resin composition includes 0.1 part by weight to 250 parts by weight of the hydrotalcite-like compound with respect to 100 parts by weight of the resin.

According to still another embodiment of the present invention, there is provided a resin molded body. The resin molded body is formed from the above-mentioned resin composition.

According to still another embodiment of the present invention, there is provided a method of producing the above-mentioned hydrotalcite-like compound. The production method includes calcining an uncalcined hydrotalcite-like compound under air.

In one embodiment, the calcining is performed under conditions of a calcination temperature of 125°C or more and 300°C or less, and a calcination time of 0.1 hour or more and 24 hours or less.

### Advantageous Effects of Invention

According to the present invention, the hydrotalcite-like compound has a predetermined area intensity ratio in its X-ray diffraction (XRD) pattern, and hence can achieve excellent heat stability.

### Brief Description of Drawings

FIG. 1A shows the X-ray diffraction pattern (diffraction angle 2θ: from 5° to 70°) of a sample obtained in each of Examples and Comparative Examples.
FIG. **1B** shows the X-ray diffraction pattern (diffraction angle 2θ: from 30° to 50°) of the sample obtained in each of Examples and Comparative Examples.
FIG. **2** shows the FT-IR spectrum of the sample obtained in each of Examples and Comparative Examples.
FIG. **3** shows the evaluation result of the heat stability (foaming) of the sample obtained in each of Examples and Comparative Examples.
FIG. **4** shows the evaluation result of the heat stability (coloring) of the sample obtained in each of Examples and Comparative Examples.

### Description of Embodiments

Embodiments of the present invention are described below. However, the present invention is not limited to these embodiments.

### A. Hydrotalcite-like Compound

A hydrotalcite-like compound in one embodiment of the present invention is represented by the following general formula (I).

(M²⁺)_{1-X}(M³⁺)_{X}(OH)₂(Aⁿ⁻)_{X/n}·mH₂O··· (I)

In the formula (I), M²⁺ represents a divalent metal cation, M³⁺ represents a trivalent metal cation, Aⁿ⁻ represents an n-valent anion, X satisfies 0.1≤X<0.4, "n" represents an integer of from 1 to 6, and "m" satisfies 0<m≤10. In the formula (I), X preferably satisfies 0.2≤X<0.36. In the formula (I), "m" preferably satisfies 0<m≤1.8.

In the general formula (I), M²⁺ represents, for example, at least one kind of divalent metal ion selected from the group consisting of: Mg²⁺; Zn²⁺; Ca²⁺; Sr²⁺; Cu²⁺; Fe²⁺; Mn²⁺; Co²⁺; Ni²⁺; Sn²⁺; Pb²⁺; Cd²⁺; and Ba²⁺. M²⁺ represents preferably at least one kind of divalent metal ion selected from the group consisting of: Mg²⁺; and Zn²⁺, more preferably Mg²⁺.

In the general formula (I), M³⁺ represents, for example, at least one kind of trivalent metal ion selected from the group consisting of: Al³⁺; Fe³⁺; Cr³⁺; Co³⁺; and In³⁺. M³⁺ preferably represents Al³⁺. This is because Al³⁺ has, for example, high safety for living organisms, and the hydrotalcite-like compound to be obtained is white and hence can adapt to various applications.

In the general formula (I), Aⁿ⁻ represents, for example, at least one kind of anion selected from the group consisting of: CO₃²⁻; SO₄²⁻; Cl-; SiO₃²⁻; PO₄³⁻; NO₃⁻; OH-; I-; (COO)₂²⁻; (CHOHCOO)2²⁻; (CHOH)₄CH₂OHCOO⁻; C₂H₄(COO)₂²⁻; (CH₂COO)₂²⁻; CH₃CHOHCOO⁻; CH₃PO₄²⁻; C₂O₄²⁻; HCOO⁻; CH₃COO⁻; CH₃SO₃⁻; SiO₃²⁻; Si₂O₅²⁻; Si₃O₇²⁻; Si₄O₉²⁻; (HSiO₃)⁻; (HSi₂O₅)⁻; HPO₄²⁻; PO₄³⁻; and P₂O₇⁴⁻. Aⁿ⁻preferably represents CO₃²⁻.

### A-1. Physical Properties

The hydrotalcite-like compound has, in its X-ray diffraction (XRD) pattern obtained with Cu-Kα radiation, two peaks assigned to (003) diffraction at a diffraction angle 2Θ in the range of from 10° or more to 14° or less. Specifically, the compound has a first peak P1 having a peak top at a diffraction angle 2Θ in the range of from 10° or more to 12° or less, and a second peak P2 having a peak top at a diffraction angle 2Θ in the range of from more than 12° to 14° or less. It is conceivable that the hydrotalcite-like compound having the first peak P1 and the second peak P2 as described above has an interlayer distance shorter than that of a hydrotalcite-like compound having only the first peak P1, and hence while part of water positioned between the layers of the compound (interlayer water) is eliminated, the other part of the interlayer water remains.

The ratio R_{XRD} (S_{P2}/S_{P1}) of the area intensity of the second peak P2 to the area intensity of the first peak P1 is 0.7 or more, preferably 0.8 or more, more preferably 1 or more, still more preferably 1.2 or more. Meanwhile, the R_{XRD} is 50 or less, preferably 30 or less, more preferably 25 or less, still more preferably 21 or less, particularly preferably 10 or less. Such ranges enable extremely effective suppression of the foaming. Specifically, part of the interlayer water is eliminated, and hence foaming resulting from the interlayer water of the hydrotalcite-like compound can be suppressed. Simultaneously, the other part of the interlayer water remains, and hence the ability of the hydrotalcite-like compound to capture a chloride ion can be retained. Accordingly, for example, foaming resulting from hydrochloric acid derived from the dehydrochlorination reaction of a resin can be suppressed. When no chloride ion is captured by the hydrotalcite-like compound, the hydrochloric acid derived from the dehydrochlorination reaction of the resin described above may undergo a neutralization reaction with the surface of the hydrotalcite-like compound to produce water. The water may evaporate to cause the foaming. In addition, the above-mentioned ranges also enable the suppression of coloring resulting from a metal ion eluted from the hydrotalcite-like compound by the neutralization reaction. One feature of the present invention lies in that attention is paid to such neutralization reaction.

The hydrotalcite-like compound may have, in its XRD pattern obtained with the Cu-Kα radiation, a third peak P3 having a peak top at a diffraction angle 2θ in the range of from 36° or more to 38° or less. The third peak P3 may result from alumina. The ratio R_{XRD}' (S_{P3}/S_{P1}) of the area intensity of the third peak P3 to the area intensity of the first peak P1 is preferably 0.17 or more, more preferably 0.19 or more, still more preferably 0.22 or more. Meanwhile, the R_{XRD}' is preferably 10 or less, more preferably 8 or less, still more preferably 5 or less, particularly preferably 3 or less.

The hydrotalcite-like compound may have, in its FT-IR spectrum obtained by a KBr tablet method, a first peak A1 in the range of from 1,270 cm⁻¹ to 1,460 cm⁻¹, and a second peak A2 in the range of from 1,460 cm⁻¹ to 1,720 cm⁻¹. The ratio R_{IR} (S_{A2}/S_{A1}) of the area intensity of the second peak A2 to the area intensity of the first peak A1 is preferably 0.65 or more, more preferably 0.7 or more. When part of the interlayer water responsible for a hydrogen bond with a carbonate ion is eliminated, a state in which the C=O double-bond property of the carbonate ion is high is established, and hence the intensity of the peak (A2) at higher wavenumbers derived from the carbonate ion can increase. The R_{IR} (S_{A2}/S_{A1}) enables extremely effective suppression of the foaming. In addition, when the state in which the C=O double-bond property is high is established, for example, an interaction between the carbonate ion and an aluminum ion on the surface of each of the layers of the compound may enlarge to prevent a water molecule, which enters a space between the layers through moisture absorption after the elimination of the interlayer water, from forming a hydrogen bond, and hence the prevention can contribute to an improvement in foaming suppression. Meanwhile, the R_{IR} is preferably 1.35 or less, more preferably 1.25 or less, still more preferably 1.2 or less, particularly preferably 1.1 or less. Such R_{IR} enables the retention of carbonate ion exchangeability between the layers.

It is preferred that the hydrotalcite-like compound be substantially free of a peak or a shoulder in the range of from 2,930 cm⁻¹ to 3,140 cm⁻¹ in its FT-IR spectrum obtained by the KBr tablet method. Specifically, part of the interlayer water responsible for a hydrogen bond is preferably eliminated. Herein, the phrase "substantially free of a peak or a shoulder" means that a displacement from a baseline is equal to or less than a noise level.

The hydrotalcite-like compound is typically particulate. The average secondary particle diameter of the hydrotalcite-like particles is, for example, from 0.1 um to 3 µm, preferably from 0.2 um to 1.5 um. The average secondary particle diameter is the average of median diameters in particle size distribution measurement. The BET specific surface area of the hydrotalcite-like particles is, for example, from 5 m²/g to 50 m²/g, preferably from 5 m²/g to 30 m²/g.

In one embodiment, the hydrotalcite-like particles have uniform composition in their entirety (excluding a surface treatment agent when the particles are subjected to surface treatment to be described later). Such form can provide excellent production efficiency. Specifically, the number of production steps can be reduced as compared to that in, for example, a case in which a core-shell structure is adopted.

### A-2. Surface Treatment

The hydrotalcite-like particles are preferably subjected to surface treatment. Specifically, the hydrotalcite-like particles are preferably subjected to surface treatment with any appropriate surface treatment agent. This is, for example, because the particles may be excellent in dispersibility at the time of their blending into a resin.

Examples of the surface treatment agent include a higher fatty acid, an alkali metal salt of a higher fatty acid, an anionic surfactant, a cationic surfactant, a silane coupling agent, a titanate-based coupling agent, an aluminum-based coupling agent, a silicone-based treatment agent, liquid glass, silicic acid, phosphoric acid esters, an ester of a polyhydric alcohol and a fatty acid, and a sulfuric acid ester of a higher alcohol. Those surface treatment agents may be used alone or in combination thereof. Of those, a higher fatty acid is preferably used. At least one kind selected from the group consisting of: lauric acid; oleic acid; and stearic acid is preferably used as the higher fatty acid.

The usage amount of the surface treatment agent is preferably from 0.01 wt% to 20 wt%, more preferably from 0.05 wt% to 15 wt%, still more preferably from 0.1 wt% to 10 wt%, particularly preferably from 0.5 wt% to 5 wt% of the hydrotalcite-like particles.

### A-3. Production Method

The hydrotalcite-like compound may be produced by any appropriate method. The compound may be produced by, for example, calcining (semi-calcining) an uncalcined hydrotalcite-like compound under air and under predetermined conditions.

The uncalcined hydrotalcite-like compound may be synthesized by any appropriate method. The compound may be synthesized by subjecting a reaction product obtained by a well-known and commonly used method to heating treatment in an aqueous medium. The reaction product may be obtained by, for example, subjecting a metal salt containing magnesium, aluminum, or the like to a reaction in an aqueous solution containing a carbonate ion under the condition of a pH of from 8.5 to 11.5. Details about a method of producing the uncalcined hydrotalcite-like compound (hydrotalcite particles) are described in, for example, WO 2015/068312 A1, the entire description of which is incorporated herein by reference. The surface treatment is preferably applied to the uncalcined hydrotalcite-like compound.

The conditions under which the uncalcined hydrotalcite-like compound is calcined may be set to any appropriate conditions as long as the above-mentioned physical properties can be satisfied. The temperature at which the uncalcined hydrotalcite-like compound is calcined is, for example, 125°C or more, preferably 180°C or more. Such temperature enables efficient elimination of the interlayer water. Meanwhile, the calcination temperature is, for example, 300°C or less, preferably 250°C or less. Such temperature can provide a hydrotalcite-like compound having a stable three-dimensional structure.

The time period for which the uncalcined hydrotalcite-like compound is calcined may be set in accordance with, for example, the above-mentioned calcination temperature. Specifically, when the calcination temperature is high, the calcination time may be set to be short, and when the calcination temperature is low, the calcination time may be set to be long. The calcination time is, for example, 0.1 hour or more, preferably 0.5 hour or more. Meanwhile, the calcination time is, for example, 24 hours or less, preferably 12 hours or less. In one embodiment, the calcination is performed under the conditions of a temperature of 200°C or more and 220°C or less, and a time period of from 1 hour to 8 hours.

The calcination of the uncalcined hydrotalcite-like compound may be continuously performed, or may be performed in a multi-stage manner at different temperatures. For example, after the performance of first calcination at from 200°C to 210°C, second calcination may be performed at from 180°C to 190°C. When the calcination is performed in a multi-stage manner, the calcination time is the sum of calcination times in the respective steps.

### A-4. Usage Method

The hydrotalcite-like compound is typically incorporated into a resin (including a rubber). A resin composition including the resin and the hydrotalcite-like compound is described below.

### B. Resin Composition

A resin composition in one embodiment of the present invention includes: a resin containing a chlorine-containing resin; and the above-mentioned hydrotalcite-like compound. Any appropriate resin is used as the chlorine-containing resin as long as the resin is a resin (polymer) containing a chlorine atom. A vinyl chloride-based resin is preferably used.

Examples of the vinyl chloride-based resin include homopolymers, such as polyvinyl chloride (PVC), chlorinated polyvinyl chloride, polyvinylidene chloride, and a chlorinated rubber. The examples also include copolymers, such as a vinyl chloride-vinyl acetate copolymer, a vinyl chloride-ethylene-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-urethane copolymer, a vinyl chloride-acrylic acid ester copolymer, a vinyl chloride-styrene-maleic anhydride copolymer, a vinyl chloride-styrene-acrylonitrile copolymer, a vinyl chloride-butadiene copolymer, a vinyl chloride-isoprene copolymer, a vinyl chloride-chlorinated propylene copolymer, a vinyl chloride-vinylidene chloride-vinyl acetate copolymer, a vinyl chloride-maleic acid ester copolymer, a vinyl chloride-methacrylic acid ester copolymer, a vinyl chloride-acrylonitrile copolymer, a vinyl chloride-maleimide copolymer, and internally plasticized polyvinyl chloride.

The resin may contain a chlorine-free resin. Examples of the chlorine-free resin include thermoplastic resins, such as polyethylene, a copolymer of ethylene and another α-olefin, an ethylene-vinyl acetate copolymer, an ethylene-acrylic acid ether copolymer, an ethylene-methyl acrylate copolymer, polypropylene, a copolymer of propylene and another α-olefin, polybutene-1, poly-4-methylpentene-1, polystyrene, a styrene-acrylonitrile copolymer, an ethylene-propylene-diene rubber copolymer, an ethylene-butadiene copolymer, polyvinyl acetate, polylactic acid, polyvinyl alcohol, polyacrylate, polymethacrylate, polyurethane, polyester, polyether, polyamide (PA), an acrylonitrile-butadiene-styrene copolymer (ABS), polycarbonate (PC), polyphenylene sulfide (PPS), and polyacetal (POM). The examples also include thermosetting resins, such as a phenol resin, a melamine resin, an epoxy resin, an unsaturated polyester resin, and an alkyd resin. In addition, examples of the chlorine-free resin (rubber) include an ethylene-propylene-diene rubber (EPDM), a hydrogenated nitrile rubber (HNBR), a natural rubber (NR), a butadiene rubber (BR), a urethane rubber (U), a styrene butadiene rubber (SBR), an acrylonitrile butadiene rubber (NBR), a butyl rubber (IIR), an isoprene rubber (IR), and a silicone rubber (Q).

In the resin composition, the hydrotalcite-like compound is incorporated in an amount of preferably from 0.1 part by weight to 250 parts by weight, more preferably from 1 part by weight to 200 parts by weight, still more preferably from 1 part by weight to 100 parts by weight with respect to 100 parts by weight of the resin.

The resin composition may include an optional component. Examples of the optional component include a heat stabilizer, a plasticizer, an antioxidant, a UV absorber, an antistatic agent, a lubricant, a colorant, an anti-coloring agent, and an impact modifier. Those optional components may be used alone or in combination thereof.

The heat stabilizer is preferably incorporated in an amount of from 0.01 part by weight to 10 parts by weight with respect to 100 parts by weight of the resin. The plasticizer is preferably incorporated in an amount of from 1 part by weight to 70 parts by weight with respect to 100 parts by weight of the resin. The antioxidant is preferably incorporated in an amount of from 0.01 part by weight to 2 parts by weight with respect to 100 parts by weight of the resin. The UV absorber is preferably incorporated in an amount of from 0.01 part by weight to 3 parts by weight with respect to 100 parts by weight of the resin. The antistatic agent is preferably incorporated in an amount of from 0.01 part by weight to 2 parts by weight with respect to 100 parts by weight of the resin. The lubricant is preferably incorporated in an amount of from 0.1 part by weight to 5 parts by weight with respect to 100 parts by weight of the resin. The colorant is preferably incorporated in an amount of from 0.1 part by weight to 2 parts by weight with respect to 100 parts by weight of the resin. The anti-coloring agent is preferably incorporated in an amount of from 0.01 part by weight to 5 parts by weight with respect to 100 parts by weight of the resin. The impact modifier is preferably incorporated in an amount of from 1 part by weight to 20 parts by weight with respect to 100 parts by weight of the resin.

The hydrotalcite-like compound can suppress the use of each of stabilizers, such as: perchloric acids, such as a perchloric acid-containing hydrotalcite-like compound and a perchlorate; an organotin compound; magnesium hydroxide (e.g., magnesium hydroxide having a BET specific surface area of 15 m²/g or more and an average secondary particle diameter of 2 µm or less); and magnesium oxide (e.g., fine particulate and highly active magnesium oxide having a BET specific surface area of 50 m²/g or more). Specifically, the content of such stabilizer is, for example, 5 parts by weight or less, preferably 1 part by weight or less, more preferably 0.1 part by weight or less, still more preferably 0.01 part by weight or less, particularly preferably 0.001 part by weight or less with respect to 100 parts by weight of the resin.

### C. Resin Molded Body

A resin molded body in one embodiment of the present invention is formed from the above-mentioned resin composition. Specifically, the resin molded body includes the above-mentioned resin and the above-mentioned hydrotalcite-like compound.

### Examples

The present invention is specifically described below by way of Examples, but the present invention is not limited by these Examples. Methods of measuring characteristics are as described below unless otherwise stated.

### 1. Average Secondary Particle Diameter

Measurement was performed with a MICROTRAC particle size distribution meter (manufactured by Nikkiso Co., Ltd., MT3000 II SERIES). Specifically, 5 ml of methanol was caused to conform to 700 mg of a sample (powder), and then 70 mL of a 2.0 g/L aqueous solution of sodium hexametaphosphate was added to the resultant, followed by the performance of ultrasonic treatment for 3 minutes (with "MODEL US-300" manufactured by NISSEI Corporation under the condition of a current of 400 µA). After that, 2 mL to 4 mL of the resultant dispersion liquid was loaded into the sample chamber of the particle size distribution meter in which 220 mL of a deaerated aqueous solution of sodium hexametaphosphate (2.0 g/L) was stored and circulated, and the dispersion liquid was circulated for 1 minute, followed by the measurement of its particle size distribution. The measurement was performed a total of twice, and the average secondary particle diameter of the sample was determined by calculating the average of 50% cumulative secondary particle diameters (median diameters) obtained in the respective measurements.

### 2. Specific Surface Area

Measurement was performed with a high-precision gas adsorption amount-measuring apparatus ("BELsorp-max" manufactured by MicrotracBEL Corp.). Specifically, the measurement was performed by a constant-volume gas adsorption method including using a nitrogen gas, and the specific surface area of the sample was determined through analysis by a BET multipoint method.

### 3. Mg/Al₂ Molar Ratio

The contents of Mg and Al in a solution obtained by dissolving the sample (powder) in an acid were determined by chelatometric titration, and the Mg/Al₂ molar ratio of the sample was calculated from the contents.

### [Example 1]

While predetermined ion-exchanged water was stirred in a reaction vessel having a volume of 1 L, 160 mL of a 1.5 mol/L aqueous solution of magnesium chloride, 120 mL of a 1 mol/L aqueous solution of aluminum chloride, and a mixed solution of 90 mL of an 8 mol/L aqueous solution of sodium hydroxide and 60 mL of a 1 mol/L aqueous solution of sodium carbonate were simultaneously injected into the vessel to provide a reaction product. A pH at the time of the reaction was 9.5.

700 Milliliters of the resultant reaction product was subjected to solid-liquid separation with a nutsche, and the resultant solid matter was washed with ion-exchanged water, followed by the addition of ion-exchanged water again. Thus, 700 mL of a re-emulsified slurry was obtained. 700 Milliliters of the resultant re-emulsified slurry was subjected to hydrothermal treatment at 170°C for 13 hours to be cooled. After that, the resultant slurry was heated to 80°C, and an aqueous solution (80°C) of 0.55 g of sodium stearate was gradually added to the slurry under stirring, followed by the maintenance of the state for 30 minutes. After that, the mixture was subjected to solid-liquid separation with a nutsche, and the resultant solid matter was washed with 800 mL of ion-exchanged water, and was dried at 105°C for 18 hours. The resultant dried product was pulverized with a hammer mill, and was then sieved with a 150-micron filter to provide powder.

The resultant powder had an average secondary particle diameter of 0.58 um, a BET specific surface area of 8.1 m²/g, and a Mg/Al₂ molar ratio of 4.00. In addition, the result (weight loss) of separately performed thermogravimetric (TG) measurement has shown that the chemical formula of the resultant powder is represented by Mg_{0.66}Al_{0.33}(OH)₂(CO₃)_{0.16}·0.50H₂O, and hence satisfies the general formula (I).

40 Grams of the resultant powder was loaded into a stainless steel-made tray (measuring 20.6 cm by 16.6 cm by 2.7 cm), and was evenly loosened with a stainless steel-made dispensing spoon to have a powder density of 0.17 g/cm³ (a powder thickness of 1 cm). After that, the tray was loaded into a programmable mechanical convection oven (manufactured by Yamato Scientific Co., Ltd., MODEL DKN602) heated to and held at 210°C in advance. After the temperature of the oven had reached 210°C after the loading, the calcination thereof was performed under air at the temperature for 2 hours. After the calcination, the tray was removed from the oven, and the powder was immediately sealed in a mayonnaise bottle without being cooled, followed by the storage of the bottle in a desiccator. Thus, a sample of Example 1 (having a BET specific surface area of 12.41 m²/g and a Mg/Al₂ molar ratio of 4.00, and satisfying the general formula (I)) was obtained.

### [Example 2]

A sample was obtained in the same manner as in Example 1 except that the calcination temperature was set to 215°C. The resultant powder has a Mg/Al₂ molar ratio of 4.00, and satisfies the general formula (I).

### [Comparative Example 1]

A sample was obtained in the same manner as in Example 1 except that the calcination was not performed. The resultant powder has a Mg/Al₂ molar ratio of 4.00, and satisfies the general formula (I).

### [Comparative Example 2]

A sample was obtained in the same manner as in Example 1 except that the calcination temperature was set to 195°C. The resultant powder has a Mg/Al₂ molar ratio of 4.00, and satisfies the general formula (I).

### [Comparative Example 3]

A sample was obtained in the same manner as in Example 1 except that the calcination temperature was set to 200°C. The resultant powder has a Mg/Al₂ molar ratio of 4.00, and satisfies the general formula (I).

### [Comparative Example 4]

A sample was obtained in the same manner as in Example 1 except that the calcination temperature was set to 203°C. The resultant powder has a Mg/Al₂ molar ratio of 4.00, and satisfies the general formula (I).

### [Comparative Example 5]

A sample was obtained in the same manner as in Example 1 except that the calcination temperature was set to 207°C. The resultant powder has a Mg/Al₂ molar ratio of 4.00, and satisfies the general formula (I).

### [Comparative Example 6]

A sample was obtained in the same manner as in Example 1 except that the calcination temperature was set to 220°C. The resultant powder has a Mg/Al₂ molar ratio of 4.00, and satisfies the general formula (I).

### [Comparative Example 7]

A sample (having a BET specific surface area of 11.66 m²/g) was obtained in the same manner as in Example 1 except that the calcination temperature was set to 250°C. The resultant powder has a Mg/Al₂ molar ratio of 4.00, but does not satisfy the general formula (I) because its water is completely removed.

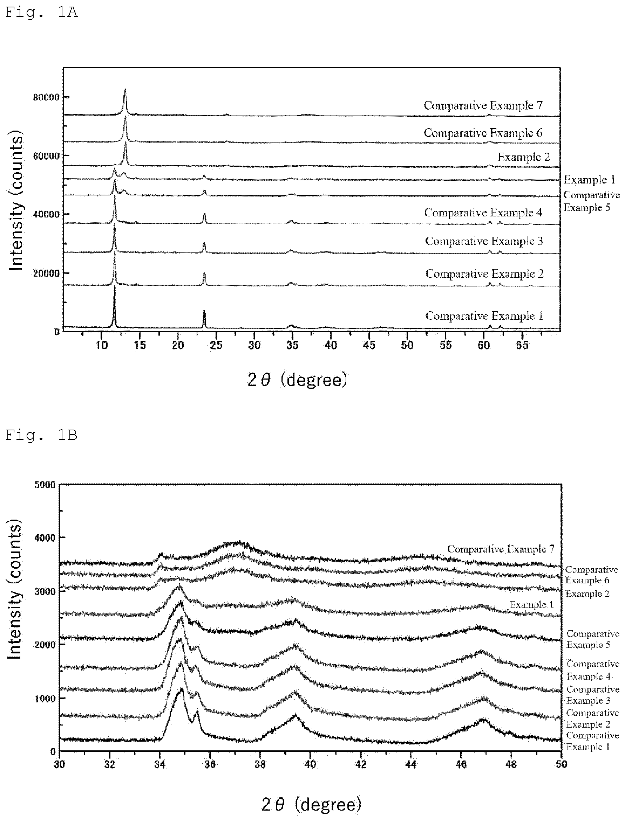

The following items of the sample obtained in each of Examples and Comparative Examples were measured. The measurement results are shown in FIG. 1A, FIG. 1B, and Table 1.

### 1. X-ray Diffractometry

The resultant sample powder was mounted on a glass cell for X-ray measurement, and then the surface of the sample was flattened with a glass plate. Thus, a sample for measurement was obtained. After that, measurement was performed with EMPYREAN (manufactured by PANalytical B.V.) to provide an X-ray diffraction pattern. Measurement conditions are as described below.
·X-ray source: Cu-Kα radiation (λ=1.542 Å)
·Voltage: 45 kV
·Current: 40 mA
·Goniometer: horizontal sample-type goniometer (reflection mode)
·Step angle: 0.013°
·Scan rate: 9.8°/min
·Diffraction angle 2θ: from 5° to 70°

### 2. Area Intensity Ratio between X-ray Diffraction Peaks

The resultant X-ray diffraction pattern at a diffraction angle 2θ of from 5° to 70° was subjected to baseline correction with X-ray diffraction software High Score Plus (manufactured by PANalytical B.V.). Then, the peaks of a hydrotalcite-like compound assigned to (003) diffraction at a diffraction angle 2Θ in the range of from 10° or more to 14° or less were designated, and profile fitting was performed by using "Split Width and Shape" as an asymmetric function. After the analysis, a peak having a peak top at a diffraction angle 2Θ in the range of from 10° or more to 12° or less was defined as a first peak P1, and a peak having a peak top at a diffraction angle 2Θ in the range of from more than 12° to 14° or less was defined as a second peak P2, followed by the calculation of the ratio R_{XRD} (S_{P2}/S_{P1}) of the area intensity of the second peak P2 to the area intensity of the first peak P1 from the area intensities (S_{P1} and S_{P2} [counts *° 2θ]) of the respective peaks. Similarly, a peak having a peak top at a diffraction angle 2Θ in the range of from 36° or more to 38° or less was defined as a third peak P3, and the ratio R_{XRD}' (S_{P3}/S_{P1}) of the area intensity of the third peak P3 to the area intensity of the first peak P1 was calculated from the area intensity S_{P3} of the peak.

**Table 1**

| | Example | | Comparative Example | | | | | | |
|---|---|---|---|---|---|---|---|---|---|
| | 1 | 2 | 1 | 2 | 3 | 4 | 5 | 6 | 7 |
| Calcin ation temper ature (°C) | 210 | 215 | - | 195 | 200 | 203 | 207 | 220 | 250 |
| R_{XRD} | 1.26 | 20.15 | 0 | 0.20 | 0.18 | 0.23 | 0.69 | ∞ | ∞ |
| R_{XRD}' | 0.29 | 4.82 | 0 | 0 | 0 | 0 | 0.16 | ∞ | ∞ |

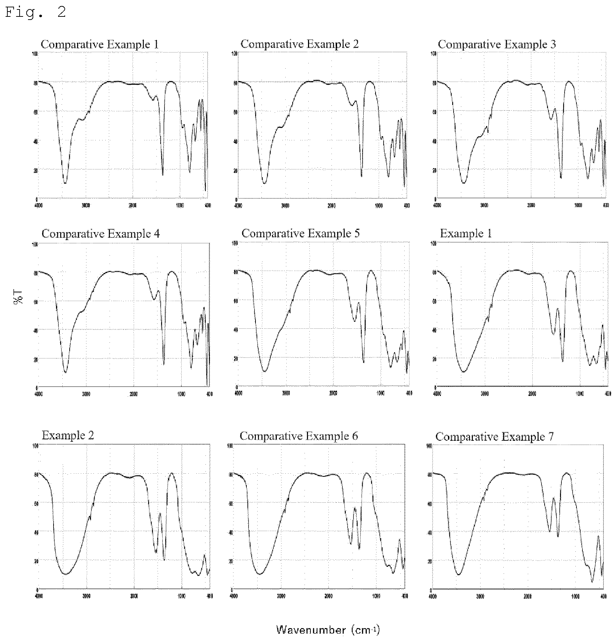

The following items of the sample obtained in each of Examples and Comparative Examples were measured. The measurement results are shown in FIG. 2 and Table 2.

### 3. FT-IR Measurement

A KBr tablet method was used in measurement. 2 Milligrams of the sample powder and 20 mg of KBr, which had been dried at 120°C and then left standing to cool in a desiccator in advance, were ground down with a pestle in a mortar. Subsequently, the resultant powder was molded into a clear disk having a diameter of 5 mm with a clear disk-molding machine (manufactured by JASCO Engineering Co., Ltd.) and a mini handpress MP-1 Mini Press (manufactured by JASCO Engineering Co., Ltd.). Similarly, a clear disk containing only 20 mg of KBr was molded for background measurement.

The resultant clear disks were each set in the clear disk holder of an infrared spectrophotometer (manufactured by JASCO Corporation, MODEL FT/IR-4100), and its FT-IR spectrum was measured under normal temperature and normal pressure. Measurement conditions are as described below.
·Detector: TGS
·Resolution: 4 cm⁻¹
·Measurement range: from 400 cm⁻¹ to 4,000 cm⁻¹
·Number of scans: 64

### 4. Area Intensity Ratio between FT-IR Peaks

The resultant spectrum was displayed with spectrum-measuring/analyzing software Spectra Manager (manufactured by JASCO Corporation) so that an axis of abscissa indicated a wavenumber (cm⁻¹) and an axis of ordinate indicated a transmittance (%T). The spectrum was subjected to atmospheric correction (CO₂ subtraction and water vapor subtraction), and then the smoothing of the spectrum (system: Savitzky-Golay, convolution width: 15) was performed. After that, the spectrum was normalized by: setting a difference between a peak valley (local minimum value), which was positioned between 3,350 cm⁻¹ and 3,550 cm⁻¹, and a transmittance at 4,000 cm⁻¹ to 70; and setting each of transmittances at three points, that is, 1,200 cm⁻¹, 2,500 cm⁻¹, and 4,000 cm⁻¹ to 80. After the normalization, a peak that was detected at a noise level of more than 0.5 and fell within the range of from 1,270 cm⁻¹ to 1,460 cm⁻¹ was defined as a first peak A1, and a peak that was detected at the noise level and fell within the range of from 1,460 cm⁻¹ to 1,720 cm⁻¹ was defined as a second peak A2. A straight line connecting the highest local maximum point in the range of from 1,270 cm⁻¹ to 1,720 cm⁻¹ detected at a noise level of 1.0 and 1,270 cm⁻¹ on the spectrum was defined as the baseline of the A1, and a straight line connecting the highest local maximum point and 1,720 cm⁻¹ thereon was defined as the baseline of the A2. Areas surrounded by the respective baselines and the spectrum were defined as the area intensities S_{A1} and S_{A2} of the A1 and the A2, respectively, and the ratio R_{IR} (S_{A2}/S_{A1}) of the area intensity of the second peak A2 to the area intensity of the first peak A1 was calculated.

**Table 2**

| | Example | | Comparative Example | | | | | | |
|---|---|---|---|---|---|---|---|---|---|
| | 1 | 2 | 1 | 2 | 3 | 4 | 5 | 6 | 7 |
| Calcination temperature (°C) | 210 | 215 | - | 195 | 200 | 203 | 207 | 220 | 250 |
| R_{IR} | 0.83 | 1.24 | 0.12 | 0.18 | 0.30 | 0.28 | 0.62 | 1.37 | 1.45 |

It is recognized from FIG. 2 that Examples 1 and 2, and Comparative Examples 6 and 7 are each substantially free of a peak or a shoulder in the range of from 2,930 cm⁻¹ to 3,140 cm-1

### <Evaluation>

The sample obtained in each of Examples and Comparative Examples was evaluated for its heat stability by the following method.

### 1. Foaming

100 Parts by weight of PVC (manufactured by Shin-Etsu Chemical Co., Ltd., TK-700; a vinyl chloride-based resin, polymerization degree: 700), 0.6 part by weight of Zn-st (manufactured by NOF Corporation, zinc stearate; a lubricant and a heat stabilizer), 0.6 part by weight of Ca-st (manufactured by NOF Corporation, calcium stearate; a lubricant and a heat stabilizer), 0.2 part by weight of SBM (manufactured by JIAXIAN, stearoylbenzoylmethane; an anti-coloring agent), 0.4 part by weight of WAX OP (manufactured by Clariant AG, the mixture of sodium montanate and calcium montanate; a lubricant), 0.8 part by weight of Castor Wax (manufactured by Koster Keunen, Inc., a hydrogenated castor oil; a lubricant), and 1.0 part by weight of the resultant sample were kneaded with an open roll at 190°C for 3 minutes to provide a resin sample.

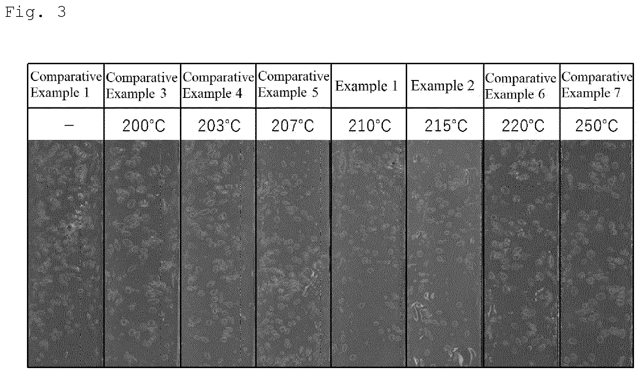

The resultant resin sample was compressed under heating in a compression molding machine at 230°C for 5 minutes to produce a test piece measuring 75 mm long by 25 mm wide by 2 mm thick, and the extent to which the test piece foamed was evaluated. Specifically, the resultant test piece was visualized as shown in FIG. 3, and the evaluation was performed by calculating the ratio (foaming ratio R_{RESIN}) of sites corresponding to bubbles in the resultant image having a predetermined size. The evaluation results are shown in Table 3 together with the calcination temperatures. Criteria for the evaluation of the foaming are as described below.

### (Criteria for Evaluation)

Satisfactory: 0≤R_{RESIN}≤0.14
Somewhat unsatisfactory: 0.14<R_{RESIN}≤0.23
Unsatisfactory: 0.23<R_{RESIN}≤1

### 2. Coloring

100 Parts by weight of PVC (manufactured by Shin-Etsu Chemical Co., Ltd., TK-1300; a vinyl chloride-based resin, polymerization degree: 1,300), 50 parts by weight of DINP (manufactured by Daihachi Chemical Industry Co., Ltd., diisononyl phthalate; a plasticizer), 0.6 part by weight of Zn-st (manufactured by NOF Corporation, zinc stearate; a lubricant and a heat stabilizer), and 3.0 parts by weight of the resultant sample were kneaded with a plastomill at 200°C and a number of revolutions of 30 rpm to provide a resin sample.

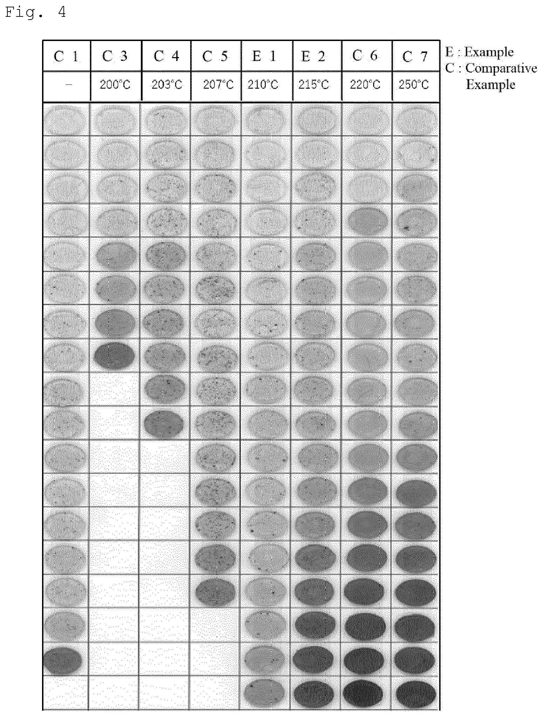

After the completion of the kneading, the resin sample was removed from a kneading tank (200°C) every 5 minutes, and the extent of its coloring was observed. The observation results are shown in FIG. 4 together with the calcination temperatures. In addition, the extent of the coloring was evaluated by measuring the yellow index of the sample with a color meter (manufactured by Nippon Denshoku Industries Co., Ltd., ZE 6000). The yellow index (initial coloring) 20 minutes after the kneading and a time period (coloring with time) required for the value of the yellow index to exceed 130 are shown in Table 3. Criteria for the evaluation of the coloring are as described below.

### (Criteria for Evaluation of Initial Coloring)

Satisfactory: Yellow Index≤60
Somewhat unsatisfactory: 60<Yellow Index≤80
Unsatisfactory: 80<Yellow Index

### (Criteria for Evaluation of Coloring with Time)

Satisfactory: 65<time (minute(s))
Somewhat unsatisfactory: 40<time (minute(s))≤65
Unsatisfactory: time (minute(s))≤40

**Table 3**

| | Example | | Comparative Example | | | | | |
|---|---|---|---|---|---|---|---|---|
| | 1 | 2 | 1 | 3 | 4 | 5 | 6 | 7 |
| Calc inat ion temp erat ure (°C) | 210 | 215 | - | 200 | 203 | 207 | 220 | 250 |
| Foam ing rati o R_{RESIN} | 0.14 Sati sfac tory | 0.12 Sati sfac tory | 0.24 Unsat isfac tory | 0.22 Somew hat unsat isfac tory | 0.23 Somew hat unsat isfac tory | 0.26 Unsat isfac tory | 0.27 Unsat isfac tory | 0.24 Unsat isfac tory |
| Init ial colo ring Yell ow Inde x | 40.4 Sati sfac tory | 53.1 Sati sfac tory | 43.2 Satis facto ry | 72.1 Somew hat unsat isfac tory | 59.6 Satis facto ry | 52.9 Satis facto ry | 94.1 Unsat isfac tory | 90.1 Unsat isfac tory |
| Colo ring with time Time (min ute( s)) | 90 Sati sfac tory | 70 Sati sfac tory | 85 Satis facto ry | 35 Unsat isfac tory | 50 Somew hat unsat isfac tory | 75 Satis facto ry | 60 Somew hat unsat isfac tory | 55 Somew hat unsat isfac tory |

In each of Examples 1 and 2, the occurrence of the foaming is suppressed in an extremely significant manner. The foaming of Comparative Example 1 in which no calcination was performed may result mainly from interlayer water and a CO₂ gas. The foaming in each of Comparative Examples 6 and 7 in which the calcination temperatures are high may result mainly from: water produced by a neutralization reaction between hydrochloric acid derived from the dehydrochlorination reaction of the resin and the surface of the hydrotalcite-like compound; and a CO₂ gas derived from CO₃²⁻ between the layers of the compound. The reaction may be recognized by using a pH-stat method.

In each of Examples 1 and 2, the coloring (each of the initial coloring and the coloring with time) is also satisfactorily suppressed. As the calcination temperature becomes higher, the speed at which the resin sample is colored tends to be faster. This may be due to a reduction in ability to capture a chloride ion derived from the resin.

It is found from the evaluation results of the foaming and the coloring (the initial coloring and the coloring with time) described above that in each of Examples, excellent heat stability can be obtained.

An attempt was made to subject even a resin sample to which no sample (powder) was added to the above-mentioned evaluations. However, the evaluations could not be performed because the resin sample was blackened during its molding by thermal deterioration.

### Industrial Applicability

The hydrotalcite-like compound in one embodiment of the present invention can be suitably combined with a chlorine-containing resin.

## Claims

1. A hydrotalcite-like compound, which is represented by the following general formula (I),
wherein the hydrotalcite-like compound has, in an X-ray diffraction (XRD) pattern thereof obtained with Cu-Kα radiation, two peaks assigned to (003) diffraction at a diffraction angle 2Θ in a range of from 10° or more to 14° or less, and
wherein a ratio R_{XRD} (S_{P2}/S_{P1}) of an area intensity of a second peak P2 having a peak top at a diffraction angle 2Θ in a range of from more than 12° to 14° or less to an area intensity of a first peak P1 having a peak top at a diffraction angle 2Θ in a range of from 10° or more to 12° or less is 0.7 or more and 50 or less:
(M²⁺)_{1-X}(M³⁺)_{X}(OH)₂(Aⁿ⁻)_{X/n}·mH₂O··· (I)
in the formula (I), M²⁺ represents a divalent metal cation, M³⁺ represents a trivalent metal cation, Aⁿ⁻ represents an n-valent anion, X satisfies 0.1≤X<0.4, "n" represents an integer of from 1 to 6, and "m" satisfies 0<m≤10.

2. The hydrotalcite-like compound according to claim 1,
wherein the hydrotalcite-like compound has, in the X-ray diffraction (XRD) pattern obtained with the Cu-Kα radiation, a third peak P3 having a peak top at a diffraction angle 2Θ in a range of from 36° or more to 38° or less, and
wherein a ratio R_{XRD}' (S_{P3}/S_{P1}) of an area intensity of the third peak P3 to the area intensity of the first peak P1 is 0.17 or more and 10 or less.

3. The hydrotalcite-like compound according to claim 1 or 2,
wherein the hydrotalcite-like compound has, in a FT-IR spectrum thereof obtained by a KBr tablet method, a first peak A1 in a range of from 1,270 cm⁻¹ to 1,460 cm⁻¹, and a second peak A2 in a range of from 1,460 cm⁻¹ to 1,720 cm⁻¹, and
wherein a ratio R_{IR} (S_{A2}/S_{A1}) of an area intensity of the second peak A2 to an area intensity of the first peak A1 is 0.65 or more and 1.35 or less.

4. The hydrotalcite-like compound according to any one of claims 1 to 3, wherein the hydrotalcite-like compound is substantially free of a peak or a shoulder in a range of from 2,930 cm⁻¹ to 3,140 cm⁻¹ in a FT-IR spectrum thereof obtained by a KBr tablet method.

5. The hydrotalcite-like compound according to any one of claims 1 to 4, wherein in the formula (I), X satisfies 0.2≤X<0.36, and "m" satisfies 0<m≤1.8.

6. A resin composition, comprising:
a resin containing a chlorine-containing resin; and
the hydrotalcite-like compound of any one of claims 1 to 5.

7. The resin composition according to claim 6, wherein the resin composition comprises 0.1 part by weight to 250 parts by weight of the hydrotalcite-like compound with respect to 100 parts by weight of the resin.

8. A resin molded body, which is formed from the resin composition of claim 6 or 7.

9. A method of producing the hydrotalcite-like compound of any one of claims 1 to 5, comprising calcining an uncalcined hydrotalcite-like compound under air.

10. The production method according to claim 9, wherein the calcining is performed under conditions of a calcination temperature of 125°C or more and 300°C or less, and a calcination time of 0.1 hour or more and 24 hours or less.
